# FASCICULE DE BREVET EUROPEEN

(11) **EP 3 945 514 B1**
(45) Date de publication et mention de la délivrance du brevet: **30.10.2024**
(21) Numéro de dépôt: 21182222.6
(22) Date de dépôt: 29.06.2021
(51) Int. Cl.: G08G 5/00

(54) **AERONEF COMPRENANT UNE ARCHITECTURE DE GESTION DE VOL**
LUFTFAHRZEUG MIT EINER FLUGSTEUERUNGSARCHITEKTUR
AIRCRAFT INCLUDING A FLIGHT MANAGEMENT ARCHITECTURE

(30) Priorité: 27.07.2020 FR 2007870
(43) Date de publication de la demande: 02.02.2022
(73) Titulaire: AIRBUS OPERATIONS (S.A.S.), 31060 Toulouse (FR)
(72) Inventeur: MERE, Jean-Claude, 31060 TOULOUSE Cedex 9 (FR); PASTRE, Thomas, 31060 TOULOUSE Cedex 9 (FR); GUILHAMET, Jean, 31060 TOULOUSE Cedex 9 (FR); PERRIN, Fabien, 31060 TOULOUSE Cedex 9 (FR); RAYNAUD, Sylvain, 31060 TOULOUSE Cedex 9 (FR)
(74) Mandataire: Jardel, Marc Henry Philippe

(56) Documents cités:
- FR-A1- 2 854 948
- FR-A1- 2 917 221
- FR-A1- 3 061 344
- US-B1- 9 043 043

## Description

La présente invention concerne un procédé de guidage d'un aéronef au moyen d'une architecture de gestion de vol.

Classiquement, une architecture de gestion de vol comprend une chaîne de guidage constituée de plusieurs systèmes de gestion du vol (FMS en anglais pour « Flight Management System ») pour gérer le plan de vol, pour calculer la trajectoire de l'aéronef pour suivre le plan de vol en tenant compte d'une métrique donnée (temps, distance, consommation de carburant, etc.) et de l'état courant de l'aéronef (position, altitude, cap, assiette, angle de montée...), et pour transmettre des consignes de guidage au contrôleur de vol afin de réaliser les asservissements des gouvernes de l'aéronef selon la trajectoire à suivre.

En cas d'incapacité des pilotes à piloter l'aéronef, il est souhaitable que l'aéronef puisse se diriger de manière autonome vers un aéroport de déroutement en suivant les consignes de guidages de la chaîne de guidage, et atterrir sur l'aéroport de déroutement en utilisant des moyens d'atterrissage autonomes.

Pour le calcul de la trajectoire de vol, chaque système de gestion de vol intègre les équations de la mécanique de vol adaptées aux conditions de vol de l'aéronef ainsi que les contraintes imposées par les différentes procédures de vol (approches...). Dans de rares cas, par exemple lors de procédures d'approches complexes nécessitant une succession de manoeuvres, le système de gestion de vol produit des anomalies comme des trajectoires inadaptées à la situation ou erronées du fait de la complexité des calculs mis en oeuvre pour assurer la combinaison des manoeuvres tout en tenant compte de l'état courant de l'aéronef Ces anomalies ne sont pas problématiques lorsque les pilotes sont en capacité de piloter l'aéronef puisque ces derniers peuvent identifier et remédier à l'anomalie tout en maintenant l'aéronef en conditions de vol sûres. Dans le cas où les pilotes seraient en incapacité à piloter l'aéronef, ces anomalies ne permettent pas d'assurer la robustesse du guidage autonome de l'aéronef vers un aéroport de déroutement, en particulier en ce qui concerne l'évitement d'obstacles.

Il existe donc un besoin de remédier à ce problème et de trouver un procédé de guidage d'un aéronef permettant d'assurer la disponibilité et l'intégrité du guidage de l'aéronef vers un aéronef de déroutement en cas d'incapacité des pilotes.

L'invention vise à répondre en tout ou partie à ce besoin et concerne un procédé de guidage d'un aéronef tel que revendiqué à la revendication 1.

Le procédé de guidage de l'aéronef selon l'invention permet, en cas d'incapacité de l'équipage à piloter l'aéronef, de diriger l'aéronef sur une trajectoire de secours vers un aéroport de déroutement en garantissant la disponibilité et l'intégrité du guidage de l'aéronef A sur la trajectoire de secours calculée pour éviter des obstacles. La mise en oeuvre de moyens d'atterrissage autonomes, qui ne font pas partie de l'invention, permettra de faire atterrir l'aéronef A sur l'aéroport de déroutement.

La demande de brevet FR2917221 représente l'état de la technique.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
- la figure 1 est une représentation schématique latérale d'un aéronef comprenant une architecture de guidage selon un mode de réalisation de l'invention ;
- la figure 2 est une vue schématique de l'architecture de guidage connectée à un contrôleur de vol, selon un mode de réalisation de l'invention ;
- la figure 3 est une vue schématique de la chaîne de guidage de secours connectée à une unité de sélection de l'architecture de guidage de la figure 2 et des interactions entre les différentes éléments de ladite chaîne pour un cas particulier de guidage ;
- la figure 4 est une vue, sous forme de logigramme, des différentes étapes mises en oeuvre par la chaîne de guidage principale de l'architecture de guidage de la figure 2;
- la figure 5 est une vue similaire à la figure 4, sous forme de logigramme, des différentes étapes mises en oeuvre par la chaîne de guidage de secours de l'architecture de guidage de la figure 2 dans un premier cas de guidage
- la figure 6 est une vue similaire à la figure 5, sous forme de logigramme, des différentes étapes mises en oeuvre par la chaîne de guidage de secours représentée à la figure 3 dans le cas particulier de guidage ;
- la figure 7 est une vue schématique de la navigation d'un aéronef et de trajectoires calculées par l'architecture de guidage représentée à la figure 2 dans une première situation ;
- la figure 8 est une vue similaire à la figure 7, dans une deuxième situation successive à la première situation illustrée à la figure 7 ;
- la figure 9 est une vue similaire à la figure 7, dans une troisième situation successive à la deuxième situation illustrée à la figure 8 ; et
- la figure 10 est une vue similaire à la figure 7, dans une quatrième situation successive à la troisième situation illustrée à la figure 9.

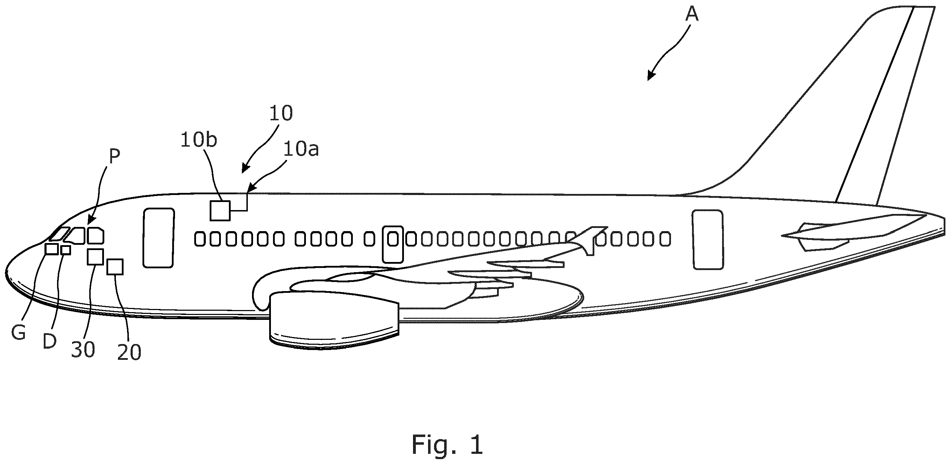

En référence avec les figures 1 à 3, un aéronef A est équipé de plusieurs systèmes et comprend un poste de pilotage P pour un équipage. Le poste de pilotage P comprend des commandes G permettant à un pilote d'agir sur le vol de l'aéronef A ou sur des systèmes de l'aéronef A, et une pluralité d'écrans d'affichage D pour afficher, à destination de l'équipage des informations provenant des différents systèmes de l'aéronef. Parmi les systèmes de l'aéronef :
- des moyens de communications 10 de l'aéronef A, comprenant une ou plusieurs antennes 10a connectées à des émetteurs/récepteurs 10b, permettant la communication avec un opérateur au sol ;
- une avionique de guidage 20 qui permet d'agir automatiquement sur les gouvernes de l'aéronef A pour suivre un plan de vol Pln élaboré avant le vol (par les pilotes, ou reçu d'un opérateur au sol via les moyens de communications);
- une unité de mesure de la capacité/incapacité physique 30 qui surveille les paramètres physiques des pilotes pour détecter si l'équipage est capable ou non de piloter l'aéronef A.

L'unité de mesure de la capacité/incapacité physique 30 comprend un ou plusieurs capteurs (non représentés), par exemple de type caméra pour mesurer les mouvements du pilotes, ou des capteurs de rythmes cardiaques arrangés dans un bracelet porté par les pilotes, et une unité centrale pour interpréter, à partir de logiques ou seuils préétablis et enregistrés dans une base de données, les résultats du ou des capteurs et déterminer si l'équipage est en capacité, ou au contraire en incapacité, de piloter l'aéronef en fonction des données des capteurs. L'unité de mesure de la capacité/incapacité physique 30 génère un signal S_incap indicatif de l'état de capacité/incapacité de l'équipage à piloter l'aéronef A, c'est-à-dire que le signal comprend une information sur la capacité, ou au contraire sur l'incapacité, des pilotes à piloter l'aéronef A.

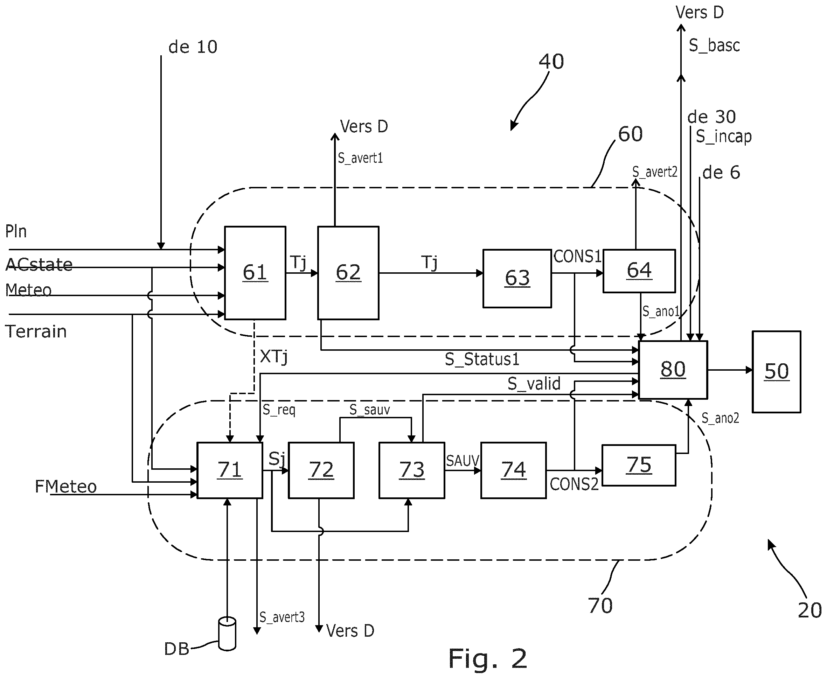

L'avionique de guidage 20, plus particulièrement visible à la figure 2, comprend :
- une architecture de guidage 40 pour calculer une trajectoire de l'aéronef A permettant à l'aéronef de suivre le plan de vol Pln et de calculer des consignes de guidage associées à la trajectoire, et
- un contrôleur de vol 50 qui reçoit les consignes de guidage de l'architecture de guidage 40 pour agir sur les gouvernes de l'aéronef A afin de suivre la trajectoire calculée.

Le contrôleur de vol 50 est un dispositif couramment utilisé sur les aéronefs et qui peut, via une action sur les commandes G, être activé pour faire voler l'aéronef A de manière autonome, ou désactivé si un pilote souhaite prendre la main sur le pilotage de l'aéronef A.

Selon un mode de réalisation de l'invention, l'architecture de guidage 40 comprend deux chaînes de guidage 60,70 prévues pour calculer des consignes de guidage, et une unité de sélection 80 des chaînes de guidage.

Parmi les deux chaînes de guidage, une première chaîne de guidage, dite chaîne de guidage principale 60, met en oeuvre un logiciel pour calculer des consignes de guidage principales CONS 1 de l'aéronef A afin de suivre une trajectoire de l'aéronef le long du plan de vol Pln. Une seconde chaîne de guidage, dite chaîne de guidage de secours 70, met en oeuvre un logiciel pour calculer des consignes de guidage de secours CONS2 de l'aéronef A afin de rejoindre un aéroport de déroutement DIV ARP dont les coordonnées sont inscrites dans une base de données DB.

Les deux chaînes de guidage sont dissimilaires, c'est-à-dire que le logiciel mis en oeuvre par la chaîne de guidage principale 60 est différent de celui mis en oeuvre par la chaîne de guidage de secours 70.

L'unité de sélection 80 est de type unité centrale avec un processeur, des mémoires dans laquelle sont enregistrées des données ainsi qu'un système d'exploitation exécuté par le processeur pour gérer un ensemble de partitions logicielles de manière que l'unité de sélection 80 puisse mettre en oeuvre des fonctions spécifiques, ainsi que des interfaces physiques avec d'autres systèmes de l'aéronef A. L'unité de sélection 80 est connectée aux deux chaînes de guidage 60,70, à l'unité de mesure de la capacité/incapacité physique 30, aux commandes G, aux écrans d'affichage D et au contrôleur de vol 50.

L'unité de sélection 80 reçoit les consignes de guidage CONS1, CONS2 fournies par les deux chaînes de guidage 60, 70 et transmet uniquement les consignes d'une seule unité de guidage au contrôleur de vol 50.

En conditions nominales (équipage en capacité de piloter et chaîne de guidage principale 60 opérationnelle), l'unité de sélection 80 transmet uniquement les consignes de guidage principales CONS1 de l'unité de guidage principale 60 au contrôleur de vol 50. Si ce dernier a été activé ou est activé, l'aéronef sera alors piloté selon les consignes de guidage principales CONS1 de l'unité de guidage principale 60

Dans les autres conditions (équipage en incapacité de piloter, ou chaîne de guidage principale 60 inopérante), l'unité de sélection 80 transmet les consignes de guidage de secours CONS2 de la chaîne de guidage de secours 70 au contrôleur de vol 50 et active, le cas échéant, le contrôleur de vol 50, pour mettre en oeuvre lesdites consignes de guidage de secours CONS2.

Par incapacité de l'équipage à piloter l'aéronef, on entend soit une incapacité physique de l'équipage au pilotage de l'aéronef A, qui est dans ce cas déterminée par l'unité de mesure de la capacité/incapacité physique 30 qui envoie un signal S_incap comportant l'information que l'équipage est en incapacité de piloter l'aéronef, soit une absence de réponse de l'équipage (pas d'action d'un pilote sur les commandes G) malgré une requête en ce sens comme cela sera explicité plus loin.

La chaîne de guidage principale 60, tout comme la chaîne de guidage de secours 70, comprend au moins deux systèmes de gestion de vol identiques mais indépendants l'un de l'autre, qui fonctionnent en parallèle l'un de l'autre, avec les mêmes données d'entrées. Chaque système de gestion de vol est, par exemple, hébergé sur plusieurs équipements matériels IMA (Integrated Modular Avionics est une architecture décrite essentiellement dans le standard dit ARINC653).Un équipement matériel comprend un processeur, de la mémoire dans laquelle sont enregistrées des données ainsi qu'un système d'exploitation exécuté par le processeur pour gérer un ensemble de partitions logicielles de manière que l'équipement en question puisse mettre en oeuvre une fonction spécifique, des interfaces physiques avec divers dispositifs de l'aéronef ou avec d'autres équipements matériels.

Pour chacune des chaînes de guidage 60,70, tous les systèmes de gestion de vol effectuent des calculs avec les mêmes données d'entrées et les mêmes signaux de l'unité de sélection 80. A tout moment, seuls les résultats des calculs réalisés par un seul système de gestion de vol, dit actif, sont utilisés pour le guidage de l'aéronef tandis que les résultats des calculs des autres systèmes de gestions de vol, dit passifs, ne sont pas utilisés. L'unité de sélection 80 peut sélectionner, pour chacune des chaînes de guidage 60,70, quel est le système de gestion de vol actif. En d'autres termes, l'unité de sélection 80 choisit l'un ou l'autre des systèmes de gestion de vol de chacune des chaînes de guidage 60,70.

Au niveau de la chaîne de guidage principale 60, les systèmes de gestion de vol mettent en oeuvre des logiciels qui réalisent des fonctions et des opérations logiques mettant en oeuvre les équations de la mécanique de vol adaptées aux conditions de vol (terrain, méteo, état courant) de l'aéronef A, ainsi que si le cas se présente, aux contraintes imposées par les différentes procédures de vol (approches...)

La chaîne de guidage principale 60 reçoit comme entrées le plan de vol de l'aéronef Pln, l'état courant de l'aéronef ACstate (position, altitude, cap, assiette, angle de montée...) et des données provenant de différents systèmes de l'aéronef A : à savoir les données météorologiques Meteo (vents, présence de cellules orageuses, grêle..) et les données de terrain Terrain (relief).

Chacun des systèmes de gestion de vol de la chaîne principale 60 comprend, comme explicité plus haut, plusieurs équipements mettant chacune en oeuvre une fonction spécifique, à savoir
- une unité de calcul de trajectoire principale 61, pour mettre en oeuvre une fonction de calcul de trajectoire à partir d'un plan de vol Pln ;
- une unité de surveillance de la trajectoire principale 62, pour mettre en oeuvre une fonction de surveillance de trajectoire ;
- une unité de guidage principale 63, pour mettre en oeuvre une fonction de transformation de trajectoire en consignes de guidage pour le contrôleur de vol 50 ; et
- une unité de surveillance du guidage principale 64, pour mettre en oeuvre une fonction de surveillance des consignes de guidage.

L'unité de calcul de la trajectoire principale 61 calcule une trajectoire partant de l'état courant de l'aéronef A jusqu'à la destination en suivant le plan de vol Pln, ce dernier étant constitué par une suite de segments, dits legs, permettant de relier un point de départ à un point d'arrivée. Chaque leg définit au moins une contrainte (vitesse, altitude...) qui doit être respectée lors du vol de l'aéronef sur ce leg. La trajectoire calculée par l'unité de calcul de la trajectoire principale 61 est dite trajectoire principale Tj. Le calcul de la trajectoire principale Tj consiste à calculer des transitions curvilignes d'un leg à l'autre du plan de vol. Afin de réaliser ce calcul, l'unité de calcul de la trajectoire principale 61 intègre les équations de la mécanique du vol et prend en compte les contraintes liées au leg, l'état courant de l'aéronef, les données météorologiques Meteo, et les données de terrain Terrain. Le calcul effectué par l'unité de calcul de la trajectoire principale 61 est d'autant plus complexe que certains legs, dits flottants, n'ont pas une position fixe dans l'espace et la transition d'un leg flottant vers un leg suivant est dépendante de l'état courant de l'aéronef et de ses performances.

La trajectoire principale Tj est fournie à l'unité de surveillance de la trajectoire principale 62. En outre, les X premières minutes (en temps de vol) de la trajectoire principale Tj à partir de l'état courant de l'aéronef A sont fournies à la chaîne de guidage de secours 70 comme cela sera explicité plus loin. A titre d'exemple, la chaîne de guidage de secours 70 reçoit en entrée les cinq premières minutes de la trajectoire principale Tj.

L'unité de surveillance de la trajectoire principale 62 s'assure que la trajectoire principale Tj est valide, c'est-à-dire ne présente pas de discontinuité et/ou de conflit avec le terrain (relief) ou la météo (évitement de cellules orageuses, zone de vents forts...). En outre, l'unité de surveillance de la trajectoire 62 s'assure, en fonction des performances de l'aéronef (enregistrées dans une mémoire), que l'aéronef A va pouvoir suivre la trajectoire principale (rayons de virage ou taux de descente compatibles avec les performances de l'aéronef A).

L'unité de guidage principale 63 calcule les écarts entre l'état courant de l'aéronef A et la trajectoire principale Tj. L'unité de guidage principale convertit ces écarts en consignes de guidage pour amener l'aéronef A sur la trajectoire principale Tj. Les consignes de guidage principales CONS1 sont envoyées à l'unité de sélection 80 et à l'unité de surveillance du guidage principale 64.

L'unité de surveillance du guidage principale 64 vérifie la validité des consignes de guidage principales CONS1, c'est-à-dire leur cohérence avec l'état courant de l'aéronef A par rapport à la trajectoire principale Tj en s'assurant que la consigne calculée va permettre de ramener effectivement l'aéronef sur la trajectoire principale Tj. Une invalidité des consignes de guidage est le signe d'une anomalie logicielle du système de gestion de vol actif.

La chaîne de guidage de secours 70 reçoit comme entrées, l'état courant de l'aéronef ACstate (position, altitude, cap, assiette, angle de montée...) et des données provenant de différents systèmes de l'aéronef A : à savoir des données météorologiques simplifiées FMeteo (présence de cellules orageuses uniquement) et les données de terrain Terrain (relief). Les systèmes de gestion de vol de la chaîne de guidage de secours 70 ont accès à la base de données DB des aéroports de déroutements, mise à jour par un opérateur au sol et transmise à l'aéronef A via les moyens de communication 10, par exemple avant le vol, en préparation du vol. La base de données DB comprend pour chaque aéroport : la position géographique de l'aéroport, des solutions d'atterrissage en autonomie comme les pistes exploitables et pour ces pistes, les moyens d'approches, les procédures d'approches simplifiées.

Chaque système de gestion de vol de la chaîne de guidage de secours 70 comprend, comme explicité plus haut, plusieurs équipements matériels mettant chacun en oeuvre une fonction spécifique, à savoir :
- une unité de calcul de trajectoire de secours 71, pour mettre en oeuvre une fonction de calcul de trajectoire vers un aéronef de déroutement DIV ARPT;
- une unité de surveillance de la trajectoire de secours 72, pour mettre en oeuvre une fonction de surveillance de trajectoire ;
- une unité de sauvegarde 73, pour mettre en oeuvre une fonction de sauvegarde de trajectoire et de validation de la trajectoire sauvegardée;
- une unité de guidage de secours 74, pour convertir une trajectoire en consignes de guidage pour le contrôleur de vol 50 ;
- une unité de surveillance du guidage de secours 75, pour mettre en oeuvre une fonction de surveillance des consignes de guidage.

L'unité de calcul de trajectoire de secours 71 reçoit une portion de la trajectoire principale correspondant aux X premières minutes (Xtj sur la figure 2) de la trajectoire principale Tj et est configurée pour calculer une trajectoire directe, dite de secours Sj,Se entre au moins une partie de ladite portion de trajectoire commune XTj (à partir de l'état courant de l'aéronefACstate : la partie de portion de trajectoire commune a toujours pour origine l'avion) et l'aéroport de déroutement DIV ARPT le plus proche. La trajectoire de secours Sj, Se va jusqu'à l'arrêt de l'aéronef A sur une piste de l'aéroport de déroutement DIV ARPT sélectionné (l'aéroport étant sélectionné par un module de sélection (non représenté) ayant accès à la base de données DB, selon un critère de proximité avec la position de l'aéronef, ou en fonction d'autres informations comme la caractéristique des pistes, la météo sur l'aéroport, l'état de l'aéronef (état moteur, niveau de carburant...) et les pistes présélectionnées par le pilote).

La trajectoire de secours Sj,Se et la trajectoire principale Tj ont, par conséquent, une partie initiale commune XTj permettant d'assurer une transition douce du vol si le contrôleur de vol 50 utilise les consignes de guidage de secours CONS2 de la chaîne de guidage de secours 70 au lieu des consignes de guidage principales CONS1 de la chaîne de guidage principale 60.

Le calcul effectué par l'unité de calcul de trajectoire de secours 71 ne s'appuie pas sur le plan de vol Pln utilisé par la chaîne de guidage principale 60 (même lorsque l'aéroport de déroutement est identique à celui initialement prévu dans le plan de vol) ce qui permet de simplifier grandement les calculs et donc le logiciel mis en oeuvre par les systèmes de gestion de vol de la chaîne de guidage de secours 70. Au contraire, l'unité de calcul de trajectoire de secours 71 calcule la trajectoire de secours Sj, Se en cherchant à aller en ligne droite vers l'aéroport de déroutement DIV ARPT, en évitant d'éventuels obstacles (relief ou cellules orageuses) sur la route directe, sans intégrer les équations de la mécanique du vol. Ainsi l'unité de calcul de trajectoire de secours 71 calcule la trajectoire de secours Sj, Se en utilisant uniquement des segments géométriques droits et/ou des arcs de cercles prédéfinis pour éviter d'éventuels obstacles (relief ou cellules orageuses) sur la route directe. Les arcs de cercles sont calculés en temps réel mais avec des hypothèses conservatives (courbure faible pour que l'avion puisse les voler même en conditions de vol dégradées par exemple). La trajectoire de secours Sj, Se est composée uniquement de segments géométriques droits et/ou d'arcs de cercles prédéfinis.

Le calcul de la trajectoire de secours Sj,Se est réitéré fréquemment, par exemple toutes les trente seconde dans le cas où la portion de trajectoire commune XTj envoyée à l'unité de calcul de trajectoire de secours 71 consiste dans les cinq premières minutes de la trajectoire principale Tj. Le calcul de la trajectoire de secours Sj, Se pourrait être réitéré plus fréquemment, par exemple toutes les dix secondes.

A chaque itération, la trajectoire de secours Sj,Se nouvellement calculée est transmise à l'unité de surveillance de la trajectoire de secours 72 qui s'assure que la trajectoire de secours Sj, Se est valide. A cet effet, l'unité de surveillance de la trajectoire de secours 72 s'assure :
- de la cohérence entre la fin de la trajectoire de secours Sj,Se et l'approche de l'aéroport de déroutement DIV ARPT visé ;
- que la trajectoire de secours Sj,Se esr volable par l'aéronef en fonction de ses capacités (notamment niveau de carburant) et performances (notamment l'enveloppe de vol) ;
- que la trajectoire de secours Sj,Se ne présente pas de discontinuité ;
- par des calculs d'anticipation de la position de l'aéronef le long de la trajectoire de secours Sj, Se que l'aéronef ne risque pas de croiser une cellule orageuse ou de percuter un relief.

La trajectoire de secours Sj,Se est invalide si elle ne remplit pas toutes ces conditions.

Si l'unité de surveillance de la trajectoire de secours 72 valide la trajectoire de secours Sj, Se cette dernière est enregistrée dans l'unité de sauvegarde 73 en lieu et place de la sauvegarde de la trajectoire de secours Sj, Se calculée lors d'une itération précédente.

La sauvegarde de la dernière trajectoire de secours Sj, Se validée permet de continuer à guider sur la dernière trajectoire de secours Sj, Se valide si les calculs permettant d'atteindre l'aéroport de déroutement DIV ARPT échouent à plusieurs reprises à un moment donné (cas où la chaîne de guidage de secours 70 ne trouve plus de solution). La trajectoire enregistrée SAUV dans l'unité de sauvegarde est mise à jour en temps réel pour l'adapter à l'évolution de l'état courant de l'aéronef A.

L'unité de sauvegarde 73 est configurée pour s'assurer de la validité de la trajectoire de secours enregistrée SAUV, en s'assurant :
- de la cohérence entre la fin de la trajectoire enregistrée SAUV et l'approche de l'aéroport de déroutement DIV ARPT visé ;
- que la trajectoire enregistrée SAUV est volable par l'aéronef en fonction des capacités (notamment niveau de carburant) et performances (notamment l'enveloppe de vol) de ce dernier ;
- que la trajectoire enregistrée SAUV ne présente pas de discontinuité ;
- par des calculs d'anticipation de la position de l'aéronef le long de la trajectoire enregistrée SAUV que l'aéronef ne risque pas de croiser une cellule orageuse ou de percuter un relief.
- que la trajectoire enregistrée SAUV n'est pas périmée (c'est-à-dire enregistrée il y a plus de X itérations, par exemple X étant égal à 9 si la portion de trajectoire commune XTj est de cinq minutes et les itérations de la chaîne de guidage de secours toutes les trente secondes).

L'unité de guidage de secours 74 reçoit la dernière trajectoire SAUV enregistrée dans l'unité de sauvegarde 73 et calcule les écarts entre la position courante de l'aéronef A et ladite trajectoire. L'unité de guidage de secours transforme ces écarts en consignes de guidage de secours CONS2 pour amener l'avion sur ladite trajectoire. Les consignes de guidage de secours CONS2 sont envoyées à l'unité de sélection 80 et à l'unité de surveillance du guidage de secours 75.

L'unité de surveillance du guidage de secours 75 vérifie que les consignes fournies sont cohérentes avec l'état courant de l'aéronef A, c'est à dire que les consignes vont permettre de ramener effectivement l'aéronef sur la trajectoire de secours Sj,Se.

En variante (non représentée sur les figures), les systèmes de gestion de vol de la chaîne de guidage de secours 70 ne comprennent pas d'unité de surveillance de guidage de secours 75 et la fonction remplie par cette unité est mise en oeuvre par un dispositif extérieur (par exemple, le calculateur primaire dit PRIM) à la chaîne de guidage de secours 70, et ce pour tous les systèmes de gestion de vol de cette dernière.

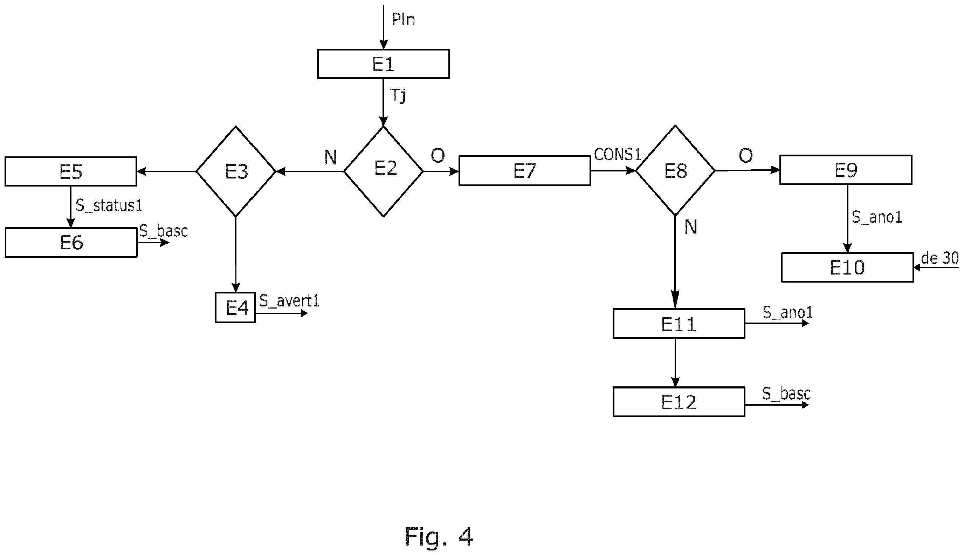

Le fonctionnement de l'architecture de guidage 40 va être décrit-ci-dessous en relation avec les figures 4 à 6.

Au niveau de la chaîne de guidage principale 60 (figure 4), dans une étape E1 de calcul de trajectoire principale Tj mise en oeuvre par l'unité de calcul de la trajectoire principale 61, la trajectoire principale Tj est calculée pour suivre le plan de vol Pln.

Dans une étape E2 de validation de la trajectoire principale, l'unité de surveillance de la trajectoire principale 62 s'assure que la trajectoire principale Tj est valide, comme expliqué plus haut.

Dans le cas où la trajectoire principale Tj est invalide, la logique mise en oeuvre dépend de l'imminence et de la nature du problème identifié. En effet, dans une étape de détermination E3 consécutive à l'étape E2 de validation de la trajectoire principale, l'unité de surveillance de la trajectoire principale 62 détermine si la trajectoire principale Tj est :
∘ involable ou présente une discontinuité ou présente un conflit (terrain ou météo) dans la portion de trajectoire commune XTj
∘ involable ou présente une discontinuité ou présente un conflit au-delà la portion de trajectoire commune XTj

A/ dans le cas où la trajectoire principale Tj présente un conflit, ou n'est pas volable ou présente une discontinuité au-delà de la portion de trajectoire commune XTj, le guidage se poursuit sur la trajectoire principale Tj et dans une étape d'information E4, l'unité de surveillance de la trajectoire principale 62 envoie un signal S_avert1 à un écran d'affichage D du poste de pilotage P pour afficher un message d'information en vue d'informer les pilotes d'un conflit, à long terme, à venir. A la réception de ce message, les pilotes pourront agir sur les commandes G pour anticiper et résoudre le conflit.

B/ dans le cas où la trajectoire principale Tj présente un conflit, ou n'est pas volable ou présente une discontinuité dans la portion de trajectoire commune XTj, et dans une étape d'alerte E5, l'unité de surveillance de la trajectoire principale 62 envoie un signal S_status1 à l'unité de sélection 80. Le signal S_status1 comprend l'information que la trajectoire principale Tj présente une anomalie dans la portion de trajectoire commune XTj.

A la réception de ce signal, et dans une étape de commutation E6, l'unité de sélection 80 bascule sur un autre système de gestion de vol de la chaîne de guidage principal 60. L'unité de sélection 80 envoie un signal S_basc à un écran du poste de pilotage P pour afficher un message d'information selon lequel le basculement d'un système de gestion de vol à un autre a eu lieu.

Si aucune trajectoire principale Tj ne présentant pas de conflit, étant volable ou ne présentant pas de discontinuité dans la portion de trajectoire commune XTj ne peut être calculée par l'autre ou les autres systèmes de gestion de vol de la chaîne de guidage principale 60 (cas non représenté), la chaîne de guidage principale 60 est alors qualifiée de défaillante/inopérante. L'unité de sélection 80 qui reçoit les signaux S _status 1 de tous les systèmes de gestion de vol de la chaîne de guidage principale 60, considère que la chaîne de guidage principale 60 est défaillante, lorsque tous les systèmes de gestion de vol de ladite chaîne ont envoyé un signal S_status1 indiquant que la trajectoire principale Tj présente une anomalie dans la portion de trajectoire commune XTj. A la réception du signal S_status1 indiquant que la trajectoire principale Tj présente une anomalie dans la portion de trajectoire commune XTj, émis par le dernier système de gestion de vol actif (les autres systèmes de gestion de vol ayant déjà émis un tel signal), l'unité de sélection 80 bascule directement sur la chaîne de guidage de secours 70 et active le contrôleur de vol 50 s'il a été désactivé. L'unité de sélection 80 alerte le pilote du basculement sur la chaîne de guidage de secours par l'envoi d'un signal (non représenté) à un écran d'affichage D pour afficher un message d'avertissement à destination du pilote selon lequel la chaîne de guidage principale est inopérante.

A la lecture du message, le pilote pourra essayer de ré-initialiser la chaîne de guidage principale 60. La trajectoire de secours Sj ayant au moins une partie commune avec l'ancienne trajectoire principale Tj, l'aéronef ne change pas de trajectoire immédiatement; et le pilote a le temps de recharger l'ancien plan de vol et de re-basculer sur la chaîne de guidage principale 60 avant que l'aéronef ne s'écarte de l'ancienne route. Si au contraire le pilote est en incapacité (non encore détectée), l'aéronef continue sur la trajectoire de secours Sj.

Dans le cas où la trajectoire principale Tj est valide, dans une étape E7 de calcul des consignes de guidage mise en oeuvre par l'unité de guidage principale 63 consécutivement à l'étape E2 de validation de la trajectoire principale, l'unité de guidage principale 63 reçoit la trajectoire principale Tj et calcule les consignes de guidage principales CONS1 qui sont envoyées à l'unité de sélection 80 et à l'unité de surveillance du guidage principale 64.

Dans une étape E8 de vérification des consignes de guidage, mises en oeuvre par l'unité de surveillance du guidage principale 64, cette dernière vérifie la validité des consignes de guidage principales CONS1 de l'aéronef A.

Si les consignes de guidage principales CONS1 sont valides, dans une étape E9 de transmission des consignes de guidage principales CONS1 mises en oeuvre par l'unité de surveillance du guidage principale 64 suite à l'étape E8 de vérification des consignes de guidage, l'unité de surveillance du guidage principale 64 envoie un signal S_ano1 à l'unité de sélection 80 avec une information que les consignes sont valides.

Dans une étape E10 de transmission mise en oeuvre par l'unité de sélection 80 à la réception du signal S_ano1 indiquant que les consignes de guidage principales CONS1 sont valides, cette dernière transmet les consignes de guidage principales CONS1 de la chaîne de guidage principale 60 au contrôleur de vol 50 si le pilote ne présente pas d'incapacité (signal S_incap de l'unité de mesure de la capacité/incapacité physique 30 comportant l'information que les pilote sont en capacité de piloter). Dans le cas où le pilote présente une incapacité (signal S_incap de l'unité de mesure de la capacité/incapacité physique 30 comportant l'information que les pilote sont en incapacité de piloter), l'unité de sélection 80 - active le contrôleur de vol 50 si ce dernier n'est pas activé - et transmet les consignes de guidage de secours CONS2 de la chaîne de guidage de secours 70 au contrôleur de vol 50.

Si les consignes de guidage principales CONS1 sont invalides, dans une étape d'alerte E11, l'unité de surveillance du guidage principale 64 envoie un signal S_ano1 à l'unité de sélection 80. Le signal S_ano1 comprend l'information que les consignes de guidage principales CONS1 sont invalides.

A la réception de ce signal, et dans une étape de commutation E12, l'unité de sélection 80 bascule sur un autre système de gestion de vol de la chaîne de guidage principal 60. L'unité de sélection 80 envoie un signal S_basc à un écran du poste de pilotage P pour afficher un message d'information selon lequel le basculement d'un système de gestion de vol à un autre a eu lieu.

Si aucune consigne ne présentant pas d'anomalie dans la portion de trajectoire commune XTj ne peut être calculée par l'autre ou les autres systèmes de gestion de vol de la chaîne de guidage principale 60 (cas non représenté), la chaîne de guidage principale 60 est alors qualifiée de défaillante/inopérante. L'unité de sélection 80 qui reçoit les signaux S_ano1 de tous les systèmes de gestion de vol de la chaîne de guidage principale 60, considère que la chaîne de guidage principale 60 est défaillante, lorsque tous les systèmes de gestion de vol de ladite chaîne ont envoyé un signal S_ano1 indiquant que les consignes de guidage principales CONS 1 sont invalides. A la réception du signal S_ano1 indiquant que les consignes de guidage principales CONS1 sont invalides, émis par le dernier système de gestion de vol actif (les autres systèmes de gestion de vol ayant déjà émis un tel signal), l'unité de sélection 80 bascule directement sur la chaîne de guidage de secours 70 et active le contrôleur de vol 50 s'il a été désactivé. L'unité de sélection 80 alerte le pilote du basculement sur la chaîne de guidage de secours par l'envoi d'un signal (non représenté) à un écran d'affichage D pour afficher un message d'avertissement à destination du pilote selon lequel la chaîne de guidage principale est défaillante/inopérante.

A la lecture de de message, le pilote pourra essayer de ré-initialiser la chaîne de guidage principale 60. La trajectoire de secours Sj ayant au moins une partie commune avec l'ancienne trajectoire principale Tj, l'aéronef ne change pas de trajectoire immédiatement; et le pilote a le temps de recharger l'ancien plan de vol et de re-basculer sur la chaîne de guidage principale 60 avant que l'aéronef ne s'écarte de l'ancienne route. Si au contraire le pilote est en incapacité (non encore détectée), l'aéronef continue sur la trajectoire de secours Sj.

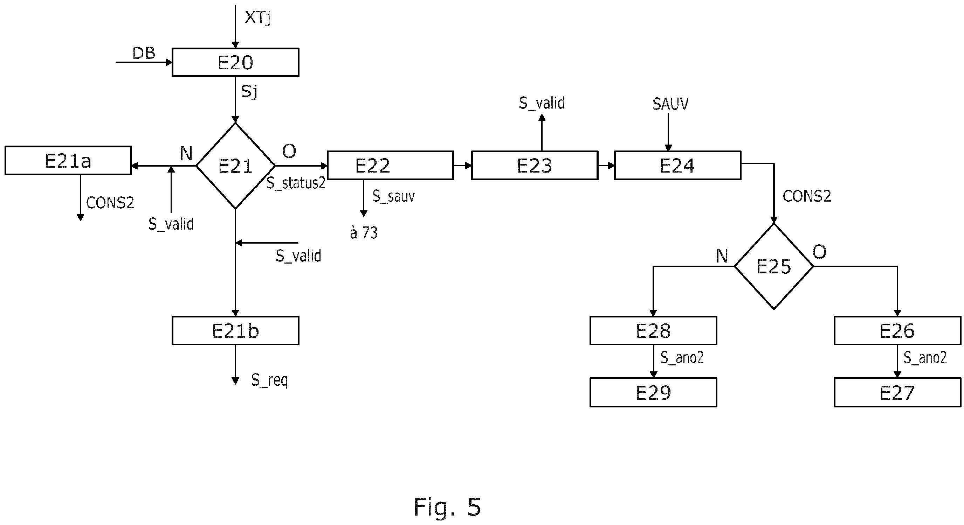

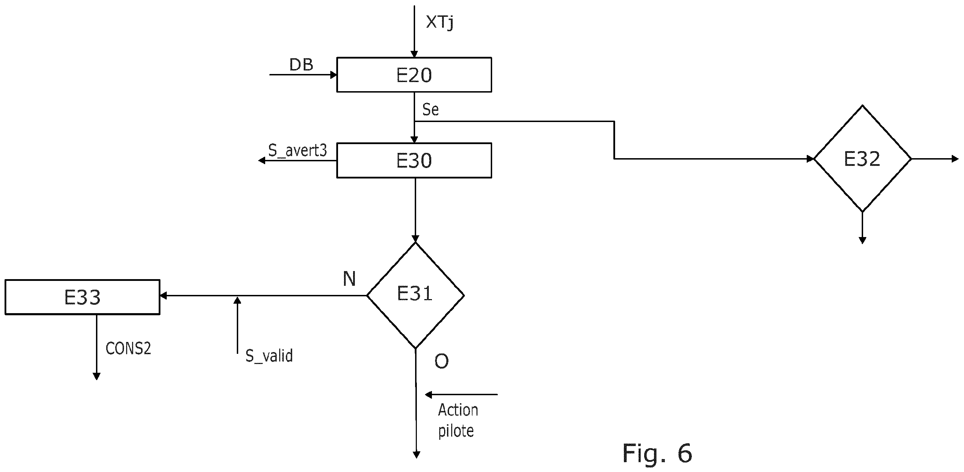

En parallèle des calculs effectués par la chaîne de guidage principale 60, au niveau de la chaîne de guidage de secours (figures 5 et 6) :
Dans une étape E20 de calcul de la trajectoire de secours mise en oeuvre par l'unité de calcul de trajectoire de secours 71, cette dernière calcule la trajectoire de secours Sj à partir de la portion de trajectoire commune XTj pour rejoindre l'aéroport de déroutement DIV ARPT. Cette étape est mise en oeuvre à chaque nouvelle itération.

Trois cas sont envisageables (figures 5 et 6):
A/ En relation avec la figure 5, le cas où l'unité de calcul de trajectoire de secours 71 est en capacité de calculer une trajectoire de secours Sj à partir de l'intégralité de la portion de trajectoire commune XTj (aucun conflit ou anomalie détecté par l'unité de calcul de trajectoire de secours 71 dans la portion de trajectoire commune XTj) :
La trajectoire de secours Sj calculée par l'unité de calcul de trajectoire de secours est transmise à l'unité de surveillance de la trajectoire de secours 72. Cette dernière, dans une étape E21 de validation de la trajectoire de secours vérifie la validité de la trajectoire de secours calculée par l'unité de calcul de trajectoire de secours 71.

Dans ce cas :
- dans une étape E22 d'enregistrement consécutive à l'étape de validation E21 de la trajectoire de secours Sj, l'unité de surveillance de la trajectoire de secours 72 envoie un signal S_sauv à l'unité de sauvegarde 73 pour que cette dernière enregistre la trajectoire de secours Sj nouvellement calculée et écrase la trajectoire enregistrée SAUV calculée lors d'une itération précédente.
- dans une étape E23 de vérification, mise en oeuvre de façon continue jusqu'à l'écrasement de la trajectoire enregistrée SAUV par une autre sauvegarde, l'unité de sauvegarde 73 vérifie la validité de la trajectoire sauvegardée SAUV et envoie un signal S_valid à l'unité de sélection 80 pour informer de la validité de la trajectoire enregistrée SAUV.
- dans une étape E24 de calcul des consignes de guidage de secours mise en place par l'unité de guidage de secours 74 suite à l'étape E23 de vérification, l'unité de guidage de secours 74 reçoit la trajectoire SAUV enregistrée dans l'unité de sauvegarde 73 et calcule les consignes de guidage de secours CONS2 pour amener l'aéronef A sur ladite trajectoire. Les consignes de guidage de secours CONS2 sont également envoyées à l'unité de sélection 80.
- dans une étape E25 de vérification des consignes de guidage, mises en oeuvre par l'unité de surveillance du guidage de secours 75 suite à l'étape E24 de calcul des consignes de guidage de secours, l'unité de surveillance du guidage de secours 75 vérifie la validité des consignes de guidage de secours CONS2, c'est-à-dire vérifie si lesdites consignes CONS2 sont cohérentes avec l'état courant de l'aéronef A par rapport à la trajectoire de secours Sj.

Si les consignes de guidage de secours CONS2 sont valides :
- dans une étape E26 de transmission des consignes de guidage, mises en oeuvre par l'unité de surveillance du guidage de secours 75 suite à l'étape E25 de vérification des consignes de guidage, l'unité de surveillance du guidage de secours 75 envoie un signal S_ano2 à l'unité de sélection 80. Ledit signal S_ano2 comprend l'information que les consignes de guidage de secours CONS2 sont valides, c'est-à-dire qu'elles peuvent être transmises, en cas d'incapacité du pilote ou d'inopérabilité de la chaîne de guidage primaire 60, au contrôleur de vol 50.
- dans une étape E27 ultérieure d'utilisation des consignes de guidage, mise en oeuvre par l'unité de sélection 80 à la réception du signal S_ano2 indiquant que les consignes de guidage de secours CONS2 sont valides, cette dernière transmet, si le pilote présente une incapacité (réception du signal S_incap indiquant une incapacité de l'équipage) ou si la chaîne de guidage primaire 60 est défaillante/inopérante, les consignes de guidage de secours CONS2 de la chaîne de guidage de secours 70 au contrôleur de vol 50 (après activation si nécessaire par l'unité de sélection 80).

En revanche, dans le cas où les consignes de guidage de secours CONS2 sont invalides :
- dans une étape E28 d'alerte mise en oeuvre par l'unité de surveillance du guidage de secours 75 suite à l'étape E25 de vérification des consignes de guidage, ladite unité envoie un signal S_ano2 à l'unité de sélection 80 avec une information que les consignes de guidage de secours CONS2 sont invalides.
- dans une étape E29 de commutation mise en oeuvre par l'unité de sélection 80 suite à l'étape E28 d'alerte, l'unité de sélection 80, à la réception du signal S_ano2, considère que les consignes de guidages de secours CONS2 du système de gestion de vol qui présente l'anomalie ne sont pas valides et ne prend pas en compte les résultats du système de gestion de vol actif. L'unité de sélection 80 utilise les résultats, en particulier les consignes de guidage de secours CONS2, d'un autre système de gestion de vol de la chaîne de guidage de secours 70 qui était jusque-là passif.

Dans le cas où la trajectoire de secours Sj est invalidée par l'unité de surveillance de la trajectoire de secours 72, du fait que la trajectoire présente une anomalie ou un conflit avec le terrain ou une cellule orageuse :
∘ si le signal S_valid envoyé par l'unité de sauvegarde 73 à l'unité de sélection 80 indique que la trajectoire enregistrée SAUV est valide, et dans une étape E21a de transmission, l'unité de sélection 80 accepte les consignes de guidage de secours CONS2 qui sont les consignes calculées à l'itération courante sur la base de la trajectoire SAUV enregistrée lors d'une itération précédente
∘ si le signal S_valid envoyé par l'unité de sauvegarde 73 à l'unité de sélection 80 indique que la trajectoire enregistrée SAUV n'est pas valide, dans une étape E21b de requête, l'unité de sélection 80 n'accepte pas les consignes de guidage de secours CONS2 et envoie un signal S_req à l'unité de calcul de la trajectoire de secours 71 pour relancer le calcul d'une trajectoire de secours avec une autre solution de déroutement (par exemple : aéroport de déroutement diffèrent).

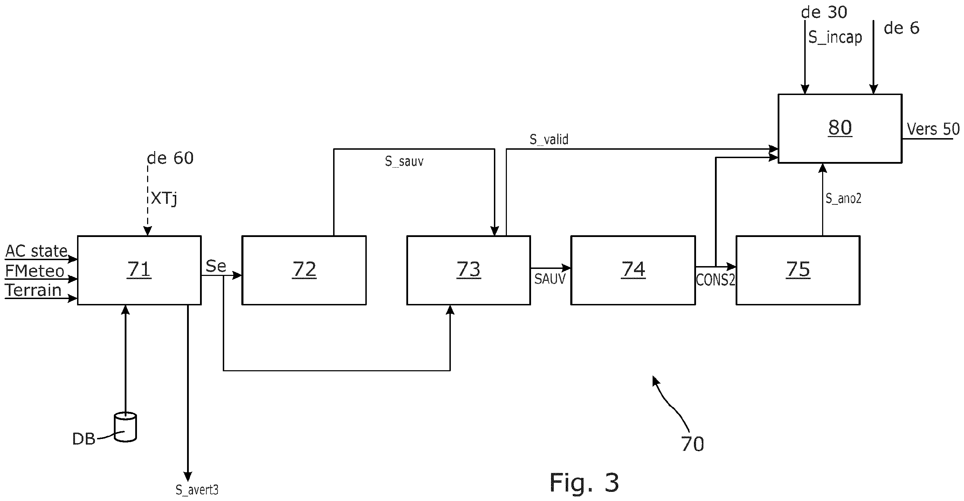

B/ En relation avec les figures 3 et 6, le cas où l'unité de calcul de trajectoire de secours 71 est en incapacité de calculer une trajectoire de secours à partir de l'intégralité de la portion de trajectoire commune XTj puisqu'elle détecte un conflit ou une anomalie dans la portion de trajectoire commune XTj.

L'unité de calcul de la trajectoire de secours 71 va calculer une trajectoire de secours, dite d'évitement Se, en réduisant la portion de trajectoire commune XTj à une partie de celle-ci jusqu'à ce que le conflit disparaisse et qu'une trajectoire de secours vers l'aéroport de déroutement DIV ARPT soit trouvée. La portion de trajectoire commune ne peut être réduite en deçà d'un temps de vol compatible (de l'ordre de 30 secondes devant l'état courant de l'aéronef) avec une ultime manoeuvre d'évitement du conflit mise en oeuvre par l'aéronef A.

Dans une étape E30 d'alerte mise en oeuvre par l'unité de calcul de la trajectoire de secours 71 suite à l'étape E20 de calcul de la trajectoire de secours, l'unité de calcul de la trajectoire de secours 71, envoie un signal S_avert3 à un écran D du poste de pilotage P pour afficher un message d'avertissement à destination du pilote l'informant du conflit et demandant d'agir, dans un temps prédéterminé (maximum de quatre minutes trente secondes en considérant une portion de trajectoire commune XTj de cinq minutes et une itération de calcul de trente secondes pour la chaîne de guidage de secours 70) sur une commande G (par exemple : modification du cap) pour résoudre le conflit.

Dans une étape E31 de surveillance mise en oeuvre par l'unité de calcul de la trajectoire de secours 71 suite à l'étape E30 d'alerte, l'unité de calcul de la trajectoire de secours 71 vérifie que le pilote a réagi pendant le temps prédéterminé en actionnant une commande G pour résoudre le conflit. Un signal (non représenté) est envoyé par l'unité de calcul de la trajectoire de secours 71 à l'unité de sélection 80, contenant l'information sur la surveillance de la réponse du pilote à la requête de l'unité de calcul de la trajectoire de secours 71 dans le temps prédéterminé.

Simultanément au déroulé de l'étape de surveillance E31, la trajectoire d'évitement Se calculée par l'unité de calcul de trajectoire de secours 71 durant l'étape E20 de calcul de la trajectoire de secours est transmise à l'unité de surveillance de la trajectoire de secours 72. Cette dernière, dans une étape E32 de validation de la trajectoire d'évitement vérifie la validité de la trajectoire d'évitement calculée par l'unité de calcul de trajectoire de secours 71.

Ce qui se produit après l'étape E32 de validation de la trajectoire d'évitement pour la trajectoire d'évitement Se est identique à ce qui a été décrit plus haut en relation avec la figure 5 après l'étape E21 de validation de la trajectoire de secours pour la trajectoire de secours Sj.

Le calcul de la trajectoire d'évitement Se est mis à jour en permanence pendant le temps prédéterminé pour prendre en compte l'évolution de l'état de l'aéronef.

L'unité de sauvegarde 73 vérifie en continu la validité de la trajectoire sauvegardée SAUV et envoie un signal S_valid à l'unité de basculement 80 pour informer de la validité de la trajectoire enregistrée SAUV.

A l'issue du temps prédéterminé :
- si le pilote a réagi dans le temps prédéterminé, ce dernier peut agir sur l'aéronef A pour éviter le conflit et lors des prochaines itérations, l'unité de calcul de la trajectoire de secours 71 sera en mesure de calculer une trajectoire de secours Sj à partir de l'intégralité de la portion commune XTj.
- si le pilote n'a pas réagi pas pendant le temps prédéterminé, dans une étape E33 de transmission des consignes de guidage, l'unité de sélection 80 - active le contrôleur de vol 50 si il a été désactivé - et transmet au contrôleur de vol 50 les consignes de guidage de secours CONS2 calculées par l'unité de guidage de secours 74 et validées par l'unité de surveillance du guidage de secours 75 et basées sur la trajectoire SAUV enregistrée dans l'unité de sauvegarde 73 et calculée à l'itération précédente (il s'agit de la trajectoire d'évitement Se), puisque l'absence de réponse dénote d'une incapacité de l'équipage à répondre rapidement au conflit imminent.

On notera que pendant le temps prédéterminé, dans le cas où l'unité de sauvegarde 73, durant une itération, anticipe une invalidité de la trajectoire sauvegardée SAUV à l'itération suivante, le signal S_valid est modifié pour comprendre l'information que la trajectoire est invalide. Par exemple, l'unité de sauvegardé anticipe une invalidité de la trajectoire sauvegardée SAUV à la prochaine itération lorsque la trajectoire sauvegardée sera périmée à ladite prochaine itération car le nombre d'itérations pendant lesquelles aucune trajectoire d'évitement Se n'a pas être calculé aura été trop important (péremption à partir de 9 itérations infructueuses de 30 secondes lorsque la portion de trajectoire commune XTj est de cinq minutes)

Dès la réception du signal S_valid mentionnant que la trajectoire sauvegardée SAUV est invalide, une solution de sauvegarde de l'aéronef A est mise en oeuvre pour que l'aéronef A puisse rejoindre un aéroport de déroutement DIV ARPT dans des conditions sures. Une solution de sauvegarde consiste par exemple en l'activation, par l'unité de sélection 80, du contrôleur de vol 50 et la transmission à ce dernier, des consignes de guidage de secours CONS2 associées à la trajectoire sauvegardé SAUV.

C/ le cas où l'unité de calcul de trajectoire de secours 71 est en incapacité totale de calculer une trajectoire de secours (cas non représenté sur les figures).

La trajectoire SAUV enregistrée lors d'une itération précédente et les consignes de guidages de secours CONS2 associées, élaborées à l'itération courante sur la base de la trajectoire SAUV sauvegardée, sont celles fournies par la chaîne de guidage de secours 70 jusqu'à la prochaine itération. L'unité de basculement 80 acceptera ces consignes CONS2 si le signal S_valid contient l'information que la trajectoire SAUV et valide.

Dans le cas ou signal S_valid contient l'information que la trajectoire SAUV est invalide, l'unité de basculement 80 n'accepte pas les consignes CONS2 et envoie un signal S_req à l'unité de calcul de la trajectoire de secours 71 pour relancer le calcul d'une trajectoire de secours avec une autre solution de déroutement (par exemple : aéroport de déroutement diffèrent)

L'architecture de guidage 40 selon l'invention permet, en cas d'incapacité de l'équipage à piloter l'aéronef A, de diriger l'aéronef A sur une trajectoire de secours vers un aéroport de déroutement en garantissant la disponibilité et l'intégrité du guidage de l'aéronef A sur la trajectoire de secours puisque les logiciels mis en oeuvre par la chaîne de guidage de secours sont robustes vis à vis des anomalies. La mise en oeuvre de moyens d'atterrissage autonomes, qui ne font pas partie de l'invention, permettra de faire atterrir l'aéronef A sur l'aéroport de déroutement.

L'architecture de guidage 40 selon l'invention est particulièrement adaptée aux opérations d'un aéronef prévu pour être piloté par un seul pilote

En avantage secondaire, l'architecture de guidage 40 selon l'invention permet d'avertir les pilotes en cas de détection d'une anomalie sur la chaîne de guidage principale 60 pour que ces derniers puissent détecter et corriger plus rapidement une anomalie.

On notera que dans un cas où le pilote, après avoir été en incapacité, est à nouveau apte à reprendre le contrôle de l'aéronef A et à faire suivre le plan de vol Pln à l'aéronef, ce dernier peut activer le contrôleur de vol 50 et agir sur l'unité de sélection 80 via les commandes G pour forcer l'unité de sélection 80 à transmettre, au contrôleur de vol 50, les consignes de guidage principales CONS1 de la chaîne de guidage principale 60 au lieu des consignes de guidage de secours CONS2 de la chaîne de guidage de secours 70.

Dans un même esprit, un opérateur au sol agissant sur les systèmes de l'aéronef A via les moyens de communications 10 de ce dernier peut également agir sur l'unité de sélection 80 pour forcer ladite unité à transmettre au contrôleur de vol 50, les consignes de guidage principales CONS1 de la chaîne de guidage principale 60 au lieu des consignes de guidages de secours CONS 2 de la chaîne de guidage de secours 70. L'opérateur au sol peut entrer un nouveau plan de vol qui sera utilisé par la chaîne de guidage principale 60, en lieu et place du plan de vol Pln initial pour éditer des consignes de guidage principales CONS1 qui seront mises en oeuvre par le contrôleur de vol 50.

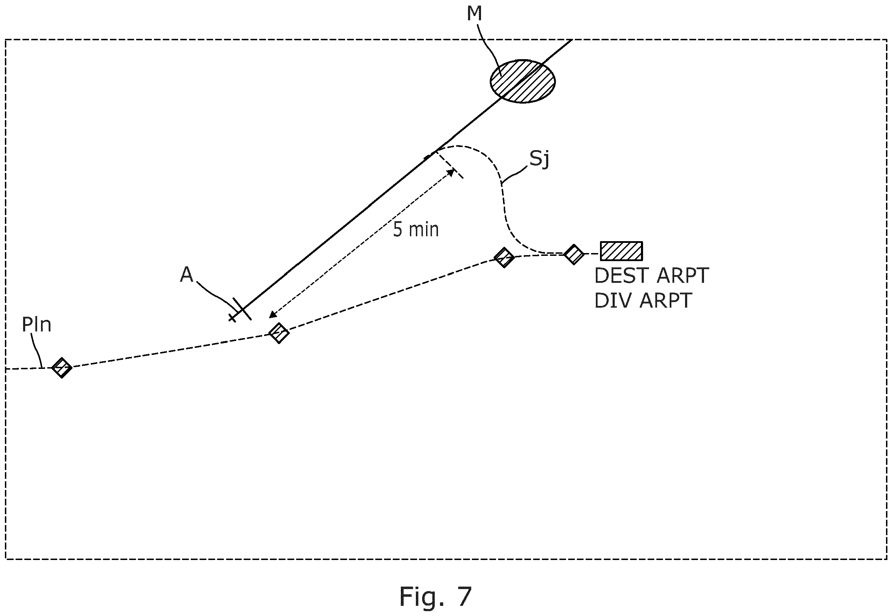

En relation avec les figures 7 à 10, un exemple de fonctionnement de l'architecture de guidage 40 selon l'invention va être décrit. Dans ces figures, le plan de vol Pln de l'aéronef A est schématisé par des segments en pointillés, joints au niveau de points de passages ayant la forme de losanges. Le point de passage final du plan de vol est l'aéroport de destination DEST ARPT. Dans l'exemple, l'aéroport de destination DEST ARPT est aussi l'aéroport de déroutement DIV ARPT considéré par la chaîne de guidage de secours 70.

L'aéronef A est proche de l'aéroport de destination DEST ARPT prévu au plan de vol et s'est éloigné, après action du pilote, du plan de vol Pln suite à des consignes du contrôleur aérien (ATC) pour éviter le trafic aérien. L'aéronef A vole en ligne droite, le long d'un vecteur courant, en attendant d'autres consignes du contrôle aérien. Un relief M se situe devant l'aéronef, à plusieurs minutes de vol (figure 7)

L'unité de guidage principale 60 calcule en permanence une trajectoire principale Tj (non représentée) pour rejoindre le plan de vol Pln, au cas où le pilote souhaiterait activer le contrôleur de vol 50 pour le pilotage de l'aéronef A de manière autonome.

Toutes les trente secondes, la chaîne de guidage de secours 60 calcule une trajectoire de secours Sj pour rejoindre l'aéroport de déroutement DIV ARPT et cette trajectoire Sj est sauvegardée. La trajectoire de secours Sj a une portion commune avec le vecteur courant (ici cinq minutes).

Dans une première itération (figure 7), la chaîne de guidage de secours calcule une trajectoire de secours Sj qui est valide et cette trajectoire de secours Sj valide est enregistrée dans l'unité de sauvegarde 73 du système de gestion de vol actif de la chaîne de guidage de secours 70.

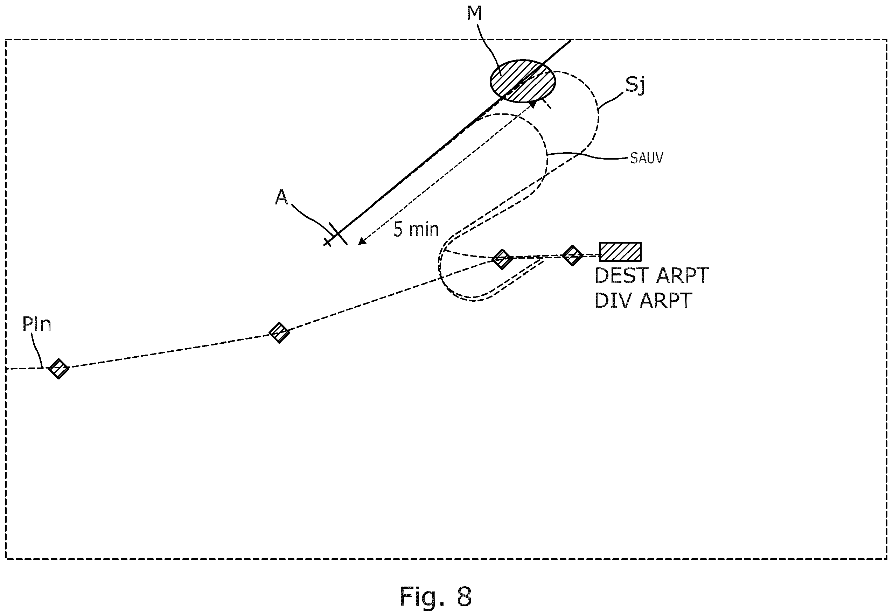

Dans une seconde itération (figure 8), la chaîne de guidage de secours 70 a calculé une trajectoire de secours Sj mais cette dernière est invalide, car elle présente un conflit avec le relief M dans la portion commune (cinq minutes).

La trajectoire de secours Sj n'étant pas valide c'est la trajectoire de secours SAUV sauvegardée dans l'unité de sauvegarde 73 qui est considérée par l'unité de sélection 80.

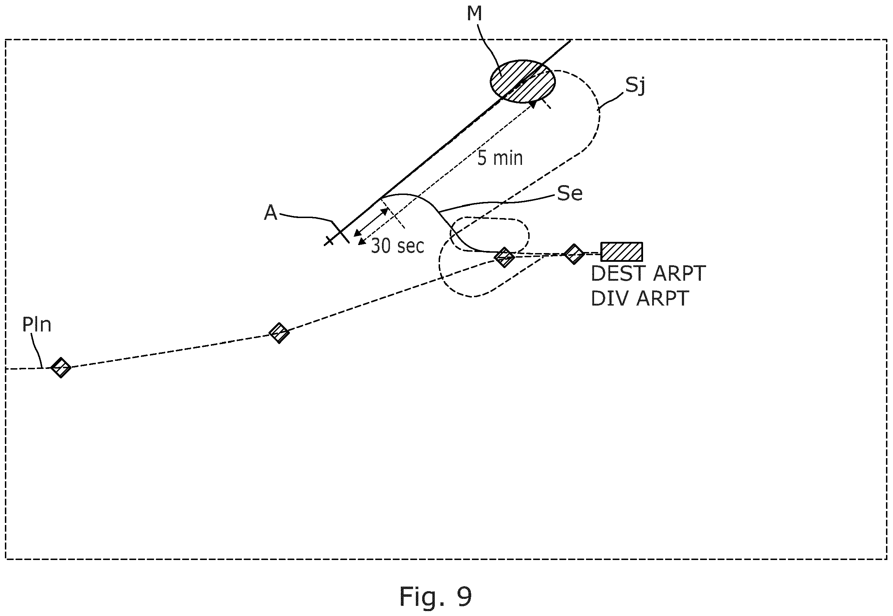

L'unité de calcul de la trajectoire de secours 71 calcule alors une trajectoire d'évitement Se en limitant la portion commune à un temps de vol de trente secondes (30 sec sur la figure 9) pour éviter le conflit avec le relief M. Un message d'avertissement est affiché sur un écran d'affichage Ddu poste de pilotage P à destination du pilote pour l'informer du conflit et demandant d'agir dans un temps prédéterminé (temps inférieur à quatre minutes trente secondes) sur une commande G (modification du cap par exemple) pour résoudre le conflit. On notera que pendant le temps prédéterminé, la trajectoire d'évitement Se est mise à jour à chaque cycle de calcul (itération) de trente secondes.

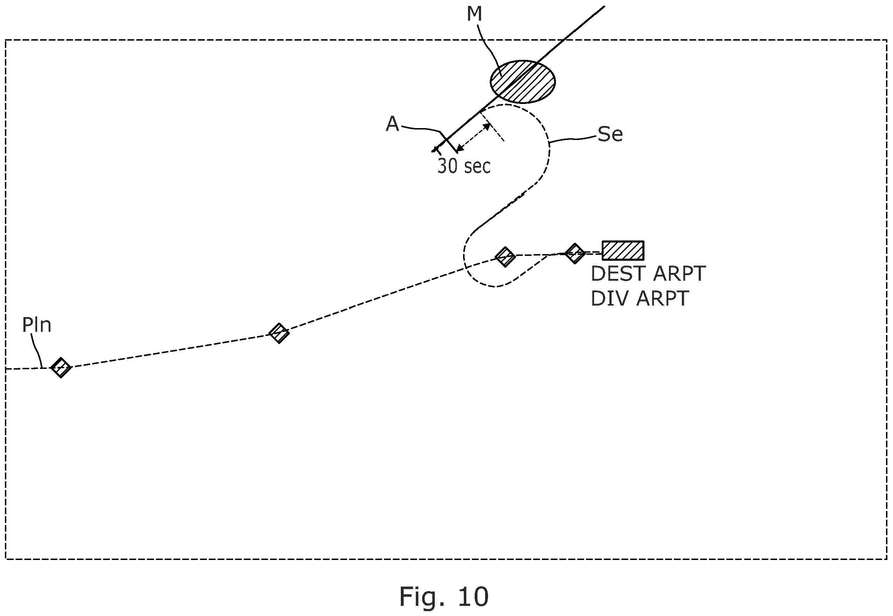

Dans l'exemple, le pilote ne réagit pas au message d'avertissement dans le temps prédéterminé. Dans une itération ultérieure (figure 10), le contrôleur de vol 50 est activé et applique les consignes de guidage de secours CONS2 de l'unité de guidage de secours 70. Les consignes de guidages de secours CONS2 sont basées sur la dernière trajectoire SAUV enregistrée dans l'unité de sauvegarde 73, c'est-à-dire à la trajectoire d'évitement Se mise à jour. La trajectoire d'évitement Se permet à l'aéronef, équipé de moyens d'atterrissage autonomes d'éviter le conflit avec le terrain et de se poser sur l'aéroport de déroutement DIV ARPT.

## Revendications

1. Procédé de guidage d'un aéronef (A) comprenant un poste de pilotage (P) avec des écrans d'affichage (D) et des commandes (G) activables par un pilote, des moyens de communication (10) avec un opérateur au sol, une unité de mesure de la capacité/incapacité physique (30) configurée pour déterminer si l'équipage est en capacité ou en incapacité de piloter l'aéronef (A) et émettre un signal (S_incap) comprenant une information sur la capacité/incapacité des pilotes à piloter l'aéronef, l'aéronef (A) comprenant en outre une avionique de guidage (20) comprenant une architecture de guidage (40) configurée pour calculer des consignes de guidage (CONS1, CONS2) de l'aéronef (A) et un contrôleur de vol (50) activable/désactivable via une action du pilote sur les commandes (G) et configuré pour piloter l'aéronef selon lesdites consignes de guidage, l'architecture de guidage (40) comprenant deux chaînes de guidage (60,70) dissimilaires et une unité de sélection (80) connectée aux deux chaînes de guidage (60,70), au contrôleur de vol (50), aux commandes (G), aux écrans d'affichage (D) et à l'unité de mesure de la capacité/incapacité physique (30) pour recevoir le signal (S_incap) émis par ladite unité, et une unité de surveillance de la trajectoire de secours (72), le procédé comprenant :
- une étape (E1) de calcul de trajectoire principale (Tj), dans laquelle une première chaîne de guidage, dite chaîne de guidage principale (60), calcule une trajectoire principale (Tj) de l'aéronef (A) vers un aéroport de destination (DEST ARPT) à partir d'un état courant de l'aéronef (ACstate) et d'un premier plan de vol (Pln) ;
- une étape (E7) de calcul des consignes de guidage principales dans laquelle la chaîne de guidage principale (60) calcule des consignes de guidage principales (CONS1) à partir de la trajectoire principale (Tj) ;
- une étape (E20) de calcul de la trajectoire de secours dans laquelle une seconde chaîne de guidage, dite chaîne de guidage de secours (70), calcule une trajectoire de secours (Sj, Se) de l'aéronef (A) vers un aéroport de déroutement (DIV ARPT) à partir d'au moins une partie de portion initiale de trajectoire commune (XTj) avec la trajectoire principale (Tj) et de l'état courant de l'aéronef (ACstate) et en en utilisant uniquement des segments et/ou des arcs de cercles prédéfinis, où la portion initiale de trajectoire commune (XTj) consiste dans une durée prédéterminée de la trajectoire principale (Tj) à partir de l'état courant de l'aéronef (ACstate) et où l'étape (E20) de calcul de la trajectoire de secours est réitérée fréquemment, selon une période plus courte que ladite durée prédéterminée ;
- une étape (E21) de validation de la trajectoire de secours dans laquelle l'unité de surveillance de la trajectoire de secours (72) vérifie la validité de chaque trajectoire de secours (Sj, Se) calculée à l'étape (E20) de calcul en s'assurant :
∘ de la cohérence entre la fin de la trajectoire de secours (Sj, Se) et l'approche de l'aéroport de déroutement(DIV ARPT)
∘ que la trajectoire de secours (Sj, Se) est volable par l'aéronef (A) en fonction de ses capacités et performances
∘ que la trajectoire de secours (Sj, Se) ne présente pas de discontinuité
∘ par des calculs d'anticipation de la position de l'aéronef (A) le long de la trajectoire de secours (Sj, Se) que l'aéronef ne risque pas de croiser une cellule orageuse ou de percuter un relief
- une étape (E24) de calcul des consignes de guidage de secours dans laquelle la chaîne de guidage de secours (70) calcule des consignes de guidage de secours (CONS2) de l'aéronef (A) à partir d'une trajectoire de secours (SAUV) calculée lors d'une étape (E20) de calcul de la trajectoire de secours et validée à l'étape (E21) de validation de la trajectoire de secours ;
- une étape de transmission (E10), mise en oeuvre par l'unité de sélection (80), durant laquelle soit l'unité de sélection (80) transmet les consignes de guidage principales (CONS1) au contrôleur de vol (50) si le signal (S_incap) émis par l'unité de mesure de la capacité/incapacité physique (30) comprend une information sur la capacité des pilotes à piloter l'aéronef ou soit transmet les consignes de guidage de secours (CONS2) au contrôleur de vol (50) si le signal (S_incap) comprend une information sur l' incapacité des pilotes à piloter l'aéronef et active le contrôleur de vol (50) si ledit contrôleur est désactivé.

2. Procédé selon la revendication 1, **caractérisé en ce que** dans l'étape (E1) de calcul de trajectoire principale (Tj), la chaîne de guidage principale (60) calcule la trajectoire principale (Tj) en intégrant les équations de la mécanique de vol.

3. Procédé selon l'une quelconque des revendications 1 à 2, **caractérisé en ce que** l'unité de sélection (80) transmet les consignes de guidage de secours (CONS2) au contrôleur de vol (50) à la réception d'un signal (S_ano1, S_status1) émis par la chaîne de guidage principale (60) et indiquant que la chaîne de guidage principale (60) est défaillante, et active le contrôleur de vol (50) si ledit contrôleur est désactivé.

4. Procédé selon l'une quelconque des revendications 1 à 3, **caractérisé en ce que** dans une étape (E30) d'alerte mise en oeuvre par la chaîne de guidage de secours (70) suite à l'étape (E20) de calcul de la trajectoire de secours dans le cas où la chaîne de guidage de secours (70) a calculé une trajectoire de secours (Se) uniquement sur une partie de la portion initiale de trajectoire commune (XTj), la chaîne de guidage de secours (70) envoie un signal (S_avert3) à un écran (D) du poste de pilotage (P) pour afficher un message d'avertissement à destination d'un pilote lui demandant d'agir sur les commandes (G) dans un temps prédéterminé, et uniquement si le pilote n'a pas réagi pas pendant le temps prédéterminé, dans une étape (E33) de transmission des consignes de guidage, l'unité de sélection (80) transmet au contrôleur de vol (50) les consignes de guidage de secours (CONS2) de la chaîne de guidage de secours et active le contrôleur de vol (50) si ledit contrôleur est désactivé.

## Patentansprüche

1. Verfahren zur Steuerung eines Flugzeugs (A), umfassend ein Cockpit (P) mit Anzeigebildschirmen (D) und Bedienelementen (G), die von einem Piloten aktivierbar sind, Mitteln zur Kommunikation (10) mit einem Operator am Boden, einer Einheit zum Messen der körperlichen Fähigkeit/Unfähigkeit (30), die dazu ausgestaltet ist, zu ermitteln, ob die Besatzung fähig oder unfähig ist, das Flugzeug (A) zu führen, und ein Signal (S_incap) auszugeben, das eine Information zu der Fähigkeit/Unfähigkeit der Piloten, das Flugzeug zu führen, umfasst, wobei das Flugzeug (A) ferner eine Steuerungsavionik (20) umfasst, die eine Steuerungsarchitektur (40) umfasst, die dazu ausgestaltet ist, Steuerungsanweisungen (CONS1, CONS2) zur Steuerung des Flugzeugs (A) zu berechnen, und einen Flugcontroller (50), der über eine Aktion des Piloten an den Bedienelementen (G) aktivierbar/deaktivierbar ist und dazu ausgestaltet ist, das Flugzeug entsprechend den Steuerungsanweisungen zu führen, wobei die Steuerungsarchitektur (40) zwei ungleiche Steuerungsketten (60,70) und eine Auswahleinheit (80), die mit den beiden Steuerungsketten (60,70), dem Flugcontroller (50), den Bedienelementen (G), den Anzeigebildschirmen (D) und der Einheit zum Messen der körperlichen Fähigkeit/Unfähigkeit (30) verbunden ist, um das von der Einheit ausgegebene Signal (S_incap) zu empfangen, und eine Nottrajektorienüberwachungseinheit (72) umfasst, wobei das Verfahren umfasst:
- einen Schritt (E1) des Berechnens einer Haupttrajektorie (Tj), bei dem eine erste Steuerungskette, Hauptsteuerungskette (60) genannt, eine Haupttrajektorie (Tj) des Flugzeugs (A) zu einem Zielflughafen (DEST ARPT) ausgehend von einem aktuellen Zustand des Flugzeugs (ACstate) und von einem ersten Flugplan (Pln) berechnet;
- einen Schritt (E7) des Berechnens von Hauptsteuerungsanweisungen, bei dem die Hauptsteuerungskette (60) Hauptsteuerungsanweisungen (CONS1) ausgehend von der Haupttrajektorie (Tj) berechnet;
- einen Schritt (E20) des Berechnens der Nottrajektorie, bei dem eine zweite Steuerungskette, Notsteuerungskette (70) genannt, eine Nottrajektorie (Sj, Se) des Flugzeugs (A) zu einem Ausweichflughafen (DIV ARPT) ausgehend von mindestens einem Teil eines gemeinsamen anfänglichen Trajektorienabschnitts (XTj) mit der Haupttrajektorie (Tj) und dem aktuellen Zustand des Flugzeugs (ACstate) und unter Verwendung nur von vorgegebenen Kreissegmenten und/oder -bögen berechnet, wobei der gemeinsame anfängliche Trajektorienabschnitt (XTj) in einer vorbestimmten Dauer der Haupttrajektorie (Tj) ausgehend von dem aktuellen Zustand des Flugzeugs (ACstate) besteht und wobei der Schritt (E20) des Berechnens der Nottrajektorie gemäß einer Periode, die kürzer als die vorbestimmte Dauer ist, häufig wiederholt wird;
- einen Schritt (E21) des Validierens der Nottrajektorie, bei dem die Nottrajektorienüberwachungseinheit (72) die Gültigkeit jeder im Berechnungsschritt (E20) berechneten Nottrajektorie (Sj, Se) überprüft, indem sichergestellt wird:
∘ die Kohärenz zwischen dem Ende der Nottrajektorie (Sj, Se) und dem Anflug auf den Ausweichflughafen (DIV ARPT)
∘ dass die Nottrajektorie (Sj, Se) von dem Flugzeug (A) in Abhängigkeit von seinen Fähigkeiten und Leistungen fliegbar ist
∘ dass die Nottrajektorie (Sj, Se) keine Diskontinuität aufweist
∘ durch Berechnungen zur Antizipation der Position des Flugzeugs (A) entlang der Nottrajektorie (Sj, Se), dass das Flugzeug nicht Gefahr läuft, auf eine Gewitterzelle zu treffen oder gegen ein Relief zu prallen
- einen Schritt (E24) des Berechnens der Notsteuerungsanweisungen, bei dem die Notsteuerungskette (70) Notsteuerungsanweisungen (CONS2) des Flugzeugs (A) ausgehend von einer Nottrajektorie (SAUV) berechnet, die bei einem Schritt (E20) des Berechnens der Nottrajektorie berechnet und im Schritt (E21) des Validierens der Nottrajektorie validiert wurde;
- einen Übertragungsschritt (E10), der von der Auswahleinheit (80) durchgeführt wird, während dessen die Auswahleinheit (80) entweder die Hauptsteuerungsanweisungen (CONS1) an den Flugcontroller (50) überträgt, wenn das von der Einheit zum Messen der körperlichen Fähigkeit/Unfähigkeit (30) ausgegebene Signal (S_incap) eine Information zur Fähigkeit der Piloten, das Flugzeug zu führen, umfasst, oder die Notsteuerungsanweisungen (CONS2) an den Flugcontroller (50) überträgt, wenn das Signal (S_incap) eine Information zur Unfähigkeit der Piloten, das Flugzeug zu führen, umfasst, und den Flugcontroller (50) aktiviert, wenn der Controller deaktiviert ist.

2. Verfahren nach Anspruch 1, **dadurch gekennzeichnet, dass** im Schritt (E1) des Berechnens der Haupttrajektorie (Tj) die Hauptsteuerungskette (60) die Haupttrajektorie (Tj) unter Einbeziehung der Gleichungen der Flugmechanik berechnet.

3. Verfahren nach einem der Ansprüche 1 bis 2, **dadurch gekennzeichnet, dass** die Auswahleinheit (80) die Notsteuerungsanweisungen (CONS2) an den Flugcontroller (50) beim Empfangen eines Signals (S_ano1, S_status1) überträgt, das von der Hauptsteuerungskette (60) ausgegeben wird und anzeigt, dass die Hauptsteuerungskette (60) ausgefallen ist, und den Flugcontroller (50) aktiviert, wenn der Controller deaktiviert ist.

4. Verfahren nach einem der Ansprüche 1 bis 3, **dadurch gekennzeichnet, dass** in einem Schritt (E30) des Alarmierens, der von der Notsteuerungskette (70) nach dem Schritt (E20) des Berechnens der Nottrajektorie in dem Fall durchgeführt wird, in dem die Notsteuerungskette (70) eine Nottrajektorie (Se) nur über einen Teil des gemeinsamen anfänglichen Trajektorienabschnitts (XTj) berechnet hat, die Notsteuerungskette (70) ein Signal (S_avert3) an einen Bildschirm (D) des Cockpits (P) sendet, um eine Warnmeldung an einen Piloten anzuzeigen, mit der er aufgefordert wird, innerhalb einer vorbestimmten Zeit auf die Bedienelemente (G) einzuwirken, und nur, wenn der Pilot während der vorbestimmten Zeit nicht reagiert hat, in einem Schritt (E33) des Übertragens der Steuerungsanweisungen, die Auswahleinheit (80) an den Flugcontroller (50) die Notsteuerungsanweisungen (CONS2) der Notsteuerungskette überträgt und den Flugcontroller (50) aktiviert, wenn der Controller deaktiviert ist.

## Claims

1. Method for guiding an aircraft (A) comprising a cockpit (P) with display screens (D) and controls (G) that can be activated by a pilot, means (10) for communicating with a ground-based operator, a unit (30) for measuring physical ability/inability configured to determine whether the crew is able or unable to fly the aircraft (A) and to transmit a signal (S_incap) comprising information relating to the ability/inability of the pilots to fly the aircraft, the aircraft (A) further comprising guidance avionics (20) comprising a guidance architecture (40) configured to compute guidance instructions (CONS1, CONS2) for the aircraft (A) and a flight controller (50) that can be activated/deactivated via an action of the pilot on the controls (G) and is configured to fly the aircraft according to said guidance instructions, the guidance architecture (40) comprising two dissimilar guidance chains (60, 70) and a selection unit (80) connected to the two guidance chains (60, 70), to the flight controller (50), to the controls (G), to the display screens (D) and to the unit (30) for measuring physical ability/inability for receiving the signal (S_incap) transmitted by said unit, and an emergency path monitoring unit (72), the method comprising:
- a step (E1) of computing a main path (Tj), in which a first guidance chain, called main guidance chain (60), computes a main path (Tj) for the aircraft (A) towards a destination airport (DEST ARPT) based on a current state (ACstate) of the aircraft and on a first flight plan (Pln) ;
- a step (E7) of computing main guidance instructions, in which the main guidance chain (60) computes main guidance instructions (CONS1) based on the main path (Tj) ;
- a step (E20) of computing the emergency path, in which a second guidance chain, called emergency guidance chain (70), computes an emergency path (Sj, Se) for the aircraft (A) towards a diversion airport (DIV ARPT) based on at least one part of an initial portion of a common path (XTj) with the main path (Tj) and on the current state (ACstate) of the aircraft and using only predefined segments and/or arcs of circles, where the initial portion of a common path (XTj) consists of a predetermined duration of the main path (Tj) based on the current state (ACstate) of the aircraft and where the step (E20) of computing the emergency path is reiterated frequently, at a period shorter than said predetermined duration;
- a step (E21) of validating the emergency path, in which the emergency path monitoring unit (72) verifies the validity of each emergency path (Sj, Se) computed in the computing step (E20) by ensuring:
∘ the consistency between the end of the emergency path (Sj, Se) and the approach of the diversion airport (DIV ARPT)
∘ that the emergency path (Sj, Se) can be flown by the aircraft (A) as a function of its capabilities and performance
∘ that the emergency path (Sj, Se) does not have any discontinuity
∘ by computations for anticipating the position of the aircraft (A) along the emergency path (Sj, Se) that the aircraft does not risk encountering a storm cell or colliding with a relief
- a step (E24) of computing emergency guidance instructions, in which the emergency guidance chain (70) computes emergency guidance instructions (CONS2) for the aircraft (A) based on an emergency path (SAUV) computed during a step (E20) of computing the emergency path and validated in the step (E21) of validating the emergency path;
- a transmission step (E10), implemented by the selection unit (80), during which the selection unit (80) either transmits the main guidance instructions (CONS1) to the flight controller (50) if the signal (S_incap) transmitted by the unit (30) for measuring physical ability/inability comprises information relating to the ability of the pilots to fly the aircraft or transmits the emergency guidance instructions (CONS2) to the flight controller (50) if the signal (S_incap) comprises information relating to the inability of the pilots to fly the aircraft and activates the flight controller (50) if said controller is deactivated.

2. Method according to Claim 1, **characterized in that**, in the step (E1) of computing the main path (Tj), the main guidance chain (60) computes the main path (Tj) by integrating the flight mechanics equations.

3. Method according to either one of Claims 1 and 2, **characterized in that** the selection unit (80) transmits the emergency guidance instructions (CONS2) to the flight controller (50) upon receipt of a signal (S_ano1, S_status1) transmitted by the main guidance chain (60) and indicating that the main guidance chain (60) is faulty, and activates the flight controller (50) if said controller is deactivated.

4. Method according to any one of Claims 1 to 3, **characterized in that**, in a warning step (E30) implemented by the emergency guidance chain (70) following the step (E20) of computing the emergency path in the event that the emergency guidance chain (70) has computed an emergency path (Se) only on one part of the initial portion of the common path (XTj), the emergency guidance chain (70) sends a signal (S_avert3) to a screen (D) of the cockpit (P) in order to display a warning message intended for a pilot asking them to act on the controls (G) within a predetermined time, and, only if the pilot has not reacted during the predetermined time, in a step (E33) of transmitting guidance instructions, the selection unit (80) transmits the emergency guidance instructions (CONS2) from the emergency guidance chain to the flight controller (50) and activates the flight controller (50) if said controller is deactivated.
